# EUROPEAN PATENT APPLICATION

(11) **EP 4 657 245 A1**
(43) Date of publication of application: **03.12.2025**
(21) Application number: 24194620.1
(22) Date of filing: 14.08.2024
(51) Int. Cl.: G06F 8/75, G06N 3/045, G06F 16/33, G06F 16/383, G06F 8/70, G06F 16/2457, G06F 16/31, G06F 8/41

(54) **COMPUTER-IMPLEMENTED METHOD, COMPUTER PROGRAM PRODUCT, APPARATUS, AND COMPUTER READABLE MEDIUM**

(30) Priority: 31.05.2024 EP 24179430
(71) Applicant: Hitachi Energy Ltd, 8050 Zürich (CH)
(72) Inventor: BLANZEISKY, William, A 67 A628 Wicklow (IE); REJIBA, Zeineb, 8064 Zürich (CH); EIDENBENZ, Raphael, 8049 Zürich (CH); DAWIDOWSKI, Pawel, 32-010 Luczyce (PL); BOMBA, Piotr, 26-400 Lipno (PL)
(74) Representative: Vossius & Partner Patentanwälte Rechtsanwälte mbB

(57) **Abstract**

The present disclosure relates to a computer-implemented method of codebase parsing for providing input of a language model (10), comprising providing at least one codebase to the language model; providing metadata relating to the codebase to the language model; and segmenting the at least one codebase into a plurality of codebase portions. Each codebase portion is associated with a portion of the metadata which corresponds to the respective codebase portion.

The present disclosure also relates to computer-implemented method of interacting with a language model (10), a computer program product, an apparatus (500), and a computer readable medium (520).

## Description

A language model (LM) is a probabilistic model of a natural language. A large language model (LLM) is a language model notable for its ability to achieve general-purpose language understanding and generation. LLMs acquire these abilities by learning statistical relationships from one or more inputs, e.g., one or more text documents, during a computationally intensive self-supervised and semi-supervised training process.

LLMs can be used for text generation by taking an input text and repeatedly predicting the next token or word. Moreover, LLMs can be used for a wide range of further applications, for example for automating software engineering tasks, such as refactoring.

For the purpose of automating software engineering tasks, the respective model navigates code repositories and understands the semantic relationships between different parts of the code. However, the current state-of-the-art models and programs face several drawbacks and/or limitations. For example, the models and programs known from the prior art have a restricted attention span and have context size limitations. This means that the models and programs struggle to focus on critical parts of the respective codebase(s), in particular relatively large codebase(s), and often cannot navigate an entire codebase at once, e.g., due to their design limitations.

Thus, there is a need to improve various aspects related to language models, in particular large language models, for example, by addressing one or more of the drawbacks described above.

One or more drawbacks related to language models, in particular large language models, in particular one or more of the drawbacks described above, may be improved by one or more aspects of the present disclosure.

According to a first aspect of the present disclosure, there is provided a computer-implemented method, in particular a computer-implemented method of processing at least one dataset, in particular codebase parsing, in particular for providing and/or assisting in providing input of or for a language model, in particular a large language model.

The method may comprise: providing the at least one codebase to the language model. The method may comprise: providing metadata relating to the codebase to the language model. Providing the at least one codebase and providing the metadata may be performed together, e.g., in a common step and/or simultaneously, or separately.

The method may comprise: segmenting the at least one codebase into a plurality of codebase portions. Each codebase portion may be associated with a portion of the metadata which corresponds to the respective codebase portion.

As mentioned at the beginning, the language models and programs known from the prior art have a restricted attention span and have context size limitations. This means that the models and programs struggle to focus on critical parts of the relevant input, e.g., one or more codebases, in particular when the input is relatively large, e.g., relatively large text and/or codebases, and often cannot navigate the entire input, e.g., codebase, at once.

Retrieval Augmented Generation (RAG) is a relatively popular general approach for augmenting a prompt with potentially relevant parts of a given larger body of text or codebase. However, the RAG-based model has several drawbacks and the results of such an RAG-based model are unsatisfactory. One reason is that the approach to simply retrieve code snippets in RAG that are similar to the prompt is too simplistic.

By contrast, the presently disclosed method augments source or original data, e.g., the codebase, for the input to the language model with metadata, as described herein, e.g., above, which allows the input data to be supplemented with data (i.e., the metadata) derived from the original or source data, e.g., an original text and/or source code. In other words, the strategy according to the method described herein may involve, in contrast to the prior art, segmenting the input., e.g., a codebase, into portions, retaining metadata about each portion, and maintaining, e.g., storing, these portions and their respective relationships, e.g., in a hierarchical look up table. Thus, for instance, providing metadata relating to the at least one codebase to the language model and segmenting the at least one codebase into a plurality of codebase portions, wherein each codebase portion may be associated with a portion of the metadata which corresponds to the respective codebase portion, as described above, provides a context-aware splitting of data for the language model. This may allow the language model to process larger and/or more extensive input, e.g., codebase, context sizes, and may enable greater focus on more relevant parts of the input which may improve the language model's ability to solve complex, real-world problems, in particular real-world software engineering problems.

The computer-implemented method described herein may significantly increase a language model's, in particular a large language model's, capabilities to execute tasks, such as refactoring, summarizing, resolving issues, and/or generating code snippets, in an existing large codebase with relatively high efficiency and relatively reliability and effectiveness compared with the prior art.

As described above, the method described herein may be used to solve or aid in solving software engineering tasks, e.g., for automating software engineering tasks. In this case, the dataset may be a codebase and the dataset portions may be codebase portions of the codebase. In this regard, the method described herein may be used for a wide range of software engineering tasks. For instance, the method described herein may be used for automated code review and quality assurance. By understanding the context and dependencies within a codebase, the language model, e.g., large language model, preferably equipped with an HLT, can perform more in-depth automated code reviews. The model can identify not just syntax errors but also potential logic errors or inefficiencies by understanding the broader context of each code snippet. This could significantly reduce the time developers spend on code reviews and improve overall code quality. Alternatively, or additionally, the method described herein may be used for advanced bug detection and resolution. With enhanced code-base awareness, the model can proactively identify potential bugs by understanding common error patterns within the context of the entire codebase. The model may then be able to suggest fixes or even automatically apply them, thereby accelerating the debugging process and reducing the time to market for software products. Alternatively, or additionally, the method described herein may be used for customized code generation and snippet suggestion. In particular, for developers working on large projects, finding the most relevant code snippets or examples can be daunting. The method described herein together with the associate large language model can offer context-aware code suggestions, automatically generating code snippets that are not just syntactically correct but also contextually appropriate for the specific part of the project the developer is working on. Alternatively, or additionally, the method described herein may be used for enhanced developer onboarding and learning. New developers or those transitioning to a different part of a large project often face a steep learning curve. A large language model that understands, with the assistance of the method described herein, the entire codebase can provide personalized guidance and explanations, helping developers understand the architecture and logic of the software more quickly and efficiently. Alternatively, or additionally, the method described herein may be used for cross-language code translation and migration. Projects often involve multiple programming languages, and translating code from one language to another can be challenging. A large language model, enhanced by means of the method described herein, can facilitate this process by understanding the semantics of code in different languages, allowing for more accurate and efficient code translation and migration.

Alternatively, or additionally, the method described herein may be used for intelligent software maintenance and evolution. As software projects grow and evolve, maintaining consistency and updating legacy code become critical challenges. Large language models with advanced codebase awareness, provided by the method described herein, can automate aspects of software maintenance, such as identifying obsolete code patterns, suggesting modernization opportunities, and ensuring that updates are consistent across the entire codebase. Alternatively, or additionally, the method described herein may be used for automatic device configuration generation and processing in line with industry standards (e.g., IEC61850) and/or design generation (e.g., scripting interface in computer-aided design tool).

Although the method according to the present disclosure may generally relate to software engineering, e.g., to codebases, and may be described herein in relation to software engineering, the present disclosure shall not be limited to such an application. In other words, the method may be used with any language model, in particular large language model.

The metadata may be generated, created, and/or recreated by and/or derived from the language model.

Preferably, a portion of the metadata is provided, e.g., retained and/or stored, together with the associated codebase portion, e.g., in a lookup table.

Preferably, segmenting the codebase into a plurality of codebase portions includes segmenting the codebase into the plurality of codebase portions using an Abstract Syntax Tree, AST, which represents a syntactic structure, in particular an abstract syntactic structure, of the codebase. Preferably, the metadata is provided, e.g., stored and/or obtained, in the AST.

Preferably, the method further includes:
providing, e.g., obtaining and/or storing, the plurality of codebase portions and the associated metadata in a lookup table, preferably a Hierarchical Lookup Table, HLT.

Hence, the method may involve segmenting or splitting the codebase into different parts, i.e., the codebase portions, retaining metadata about each part, and providing or saving the parts and their relationships in a lookup table, preferably Hierarchical Lookup Table, HLT. The use of a lookup table, preferably a Hierarchical Lookup Table, HLT, structure may improve codebase or dataset awareness.

Preferably, the lookup table, preferably the HLT, includes a plurality of nodes which correspond with the codebase portions, respectively.

Preferably, one of more of the nodes are associated with one or more keywords. Preferably, the one or more keywords each include one or more of the following: a class name, in particular when the respective node represents a class definition, a method name, a plurality of imports, a plurality of comments, a docstring, and the directory path.

Preferably, one or more of the nodes are embedded in the lookup table, preferably the HLT. Preferably, the one or more of the nodes are then represented in a vector space, preferably using one or more frequency-inverse document frequency, TF-IDF, statistical measures.

Preferably, context of content within the respective codebase portion and/or context between at least two codebase portions is provided, e.g., stored and/or obtained, in and/or coupled to the lookup table, preferably the HLT.

Preferably, the context includes and/or relates to one or more sections of the one or more codebase portions and/or one or more artifacts derived from and/or based on at least one of the one or more codebase portions. The one or more artifacts may be, in particular within the context of machine learning, one or more byproducts, e.g., of software development, that describe or aid in describing at least one architecture, at least one design, and/or at least one function of the one or more codebase portions or one or more dataset portions.

Preferably, the dataset is a codebase and the dataset portions are codebase portions of the codebase. However, the dataset may be any other type of dataset.

Preferably, the context is augmented and/or used by the language model based on and/or dependent from a context length limit of the language model.

Preferably, the metadata includes information about one or more of the following: one or more code snippets, one or more docstrings, one or more comments, one or more lists of dependencies, and one or more imports, e.g., as used in python. The one or more imports may include one or more files, one or more classes from files, and/or one or more methods.

According to a second aspect of the present disclosure, the present disclosure also relates to a computer-implemented method of interacting with and/or operating a language model. The language model may include at least one codebase and metadata relating to the codebase. The at least one codebase may be segmented into a plurality of codebase portions. Each codebase portion may be associated with a portion of the metadata which corresponds to the respective codebase portion.

The features, embodiments, and advantages, as described above with respect to the computer-implemented method according to the first aspect of the present disclosure, apply to the computer-implemented method according to the second aspect of the present disclosure accordingly.

The method may comprise:
receiving a query from a user.

The method may comprise:
searching the plurality of codebase portions based on the query.

The method may comprise:
identifying one or more relevant codebase portions of the plurality of codebase portions based on the query.

The method may comprise:
selecting one or more codebase portions of the plurality of codebase portions based on the query.

The method may comprise:
generating a response to the query based on the selected one or more codebase portions.

Preferably, the plurality of codebase portions and the associated metadata are provided in a lookup table, preferably a Hierarchical Lookup Table, HLT, which includes a plurality of nodes which correspond with the codebase portions, respectively, wherein the one or more nodes of the plurality of nodes are selected based on the query.

Preferably, the plurality of codebase portions and the associated metadata are provided in a lookup table, preferably a Hierarchical Lookup Table, HLT, which includes a plurality of nodes which correspond with the codebase portions, respectively. The one or more nodes of the plurality of nodes may be selected based on the query.

Preferably, one of more of the nodes are associated with one or more keywords, preferably wherein the one or more keywords include a class name, in particular when the respective node represents a class definition, and/or a method name. The one or more nodes of the plurality of nodes may be selected, if the query contains and/or is correlated with the one or more of the one or more keywords.

Preferably, the one or more nodes of the plurality of nodes are selected, if one or more of the one or more keywords meet at least one similarity criterion, in particular at least one similarity metric, in particular if one or more of the one or more keywords are within a distance, preferably a Hamming distance, preferably a predetermined Hamming distance, of one or more words and/or symbols and/or strings contained in the query. At least one similarity criterion, in particular at least one similarity metric, may require an identical match between at least one of the one or more keywords and at least one of the one or more words and/or symbols and/or strings contained in the query. Alternatively, the at least one similarity criterion, in particular at least one similarity metric, may be or may include a similarity threshold, which may be configured as an adjustable or tunable parameter. In other words, the at least one similarity criterion, in particular at least one similarity metric, may be a "similar enough" criterion which does not necessarily require an exact match. Alternatively, automated fitting of data to fill the context may be performed.

Preferably, one or more of the nodes are embedded in the lookup table into a vector space, preferably using one or more frequency-inverse document frequency, TF-IDF, statistical measures, wherein the query is transformed into one or more vectors. At least one vector of the one or more vectors of the nodes which have the greatest degree of correspondence and/or which meet or are above a correspondence threshold, preferably a predetermined correspondence threshold, with vectors of the query may be selected.

Preferably, context of the respective codebase portion is provided in and/or coupled to the lookup table, preferably the HLT. Preferably, the method includes: adjusting an amount of context, which is taken into account for each query, based on a complexity and/or a length of the query and/or a complexity and/or a length of each codebase portion. This may limit a context size, e.g., to prevent the context from becoming excessively large.

Preferably, context of the respective codebase portion is provided in and/or coupled to the lookup table, preferably the HLT, wherein, when selecting a codebase portion, a codebase portion, in particular a node of the lookup table, in particular a further codebase portion, in particular a further node, is only selected if the respective codebase portion, in particular the respective node, fits into a context window, in particular a predetermined context window.

Preferably, context of the respective codebase portion is provided in and/or coupled to the lookup table, preferably the HLT, wherein, after selecting a first number of one or more first codebase portions, in particular one or more first nodes, selecting a second number of one or more second codebase portions, in particular one or more second nodes, is based on a distance, in particular a distance in a hierarchical structure, in particular of the codebase, between the one or more first codebase portions, in particular the one or more first nodes, and the one or more second codebase portions, in particular the one or more second nodes. For instance, a class node may be be augmented with the nodes corresponding to the functions contained in the class, or the parent module that contains the class.

Preferably, identifying one or more relevant codebase portions of the plurality of codebase portions based on the query and/or selecting one or more codebase portions of the plurality of codebase portions based on the query is based at least partially based on the metadata.

The present disclosure also relates to a computer program product including one or more computer readable storage mediums collectively storing program instructions that are executable by a processor or programmable circuitry to cause the processor or programmable circuitry to perform operations for interacting with and/or operating a language model, wherein the language model includes at least one codebase and metadata relating to the codebase, wherein the at least one codebase is segmented into a plurality of codebase portions, wherein each codebase portion is associated with a portion of the metadata which corresponds to the respective codebase portion.

The features, embodiments, and advantages, as described above with respect to the computer-implemented method according to the first aspect of the present disclosure, apply to the computer program product accordingly.

The operations may comprise:
receiving a query from a user.

The operations may comprise:
searching the plurality of codebase portions based on the query.

The operations may comprise:
identifying one or more relevant codebase portions of the plurality of codebase portions based on the query.

The operations may comprise:
selecting one or more codebase portions of the plurality of codebase portions based on the query.

The operations may comprise:
generating a response to the query based on the selected one or more codebase portions.

The present disclosure also relates to an apparatus comprising a processor or a programmable circuitry and one or more computer readable mediums collectively including instructions that, when executed by the processor or the programmable circuitry, cause the processor or the programmable circuitry to perform operations for interacting with and/or operating a language model.

The features, embodiments, and advantages, as described above with respect to the computer-implemented method according to the first aspect of the present disclosure, apply to the apparatus accordingly.

The language model may include at least one codebase and metadata relating to the codebase. The at least one codebase may be segmented into a plurality of codebase portions. Each codebase portion may be associated with a portion of the metadata which corresponds to the respective codebase portion.

The operations may comprise:
receiving a query from a user.

The operations may comprise:
searching the plurality of codebase portions based on the query.

The operations may comprise:
identifying one or more relevant codebase portions of the plurality of codebase portions based on the query.

The operations may comprise:
selecting one or more codebase portions of the plurality of codebase portions based on the query.

The operations may comprise:
generating a response to the query based on the selected one or more codebase portions.

The present disclosure also relates to a computer readable medium including instructions that when executed by one or more processing devices cause the one or more processing devices to perform a method of interacting with and/or operating a language model. The language model may include at least one codebase and metadata relating to the codebase. The at least one codebase may be segmented into a plurality of codebase portions. Each codebase portion may be associated with a portion of the metadata which corresponds to the respective codebase portion.

The features, embodiments, and advantages, as described above with respect to the computer-implemented method according to the first aspect of the present disclosure, apply to the computer readable medium accordingly.

The method may comprise:
receiving a query from a user.

The method may comprise:
searching the plurality of codebase portions based on the query.

The method may comprise:
identifying one or more relevant codebase portions of the plurality of codebase portions based on the query.

The method may comprise:
selecting one or more codebase portions of the plurality of codebase portions based on the query.

The method may comprise:
generating a response to the query based on the selected one or more codebase portions.

The following list of aspects provides alternative and/or further features of the invention:
1. A computer-implemented method, in particular of codebase parsing, for processing and/or providing input of and/or to a language model, comprising:
   providing at least one dataset, preferably to the language model;
   optionally providing metadata relating to the dataset, preferably to the language model;
   segmenting the at least one dataset into a plurality of dataset portions;
   wherein each dataset portion includes and/or is associated with metadata which corresponds to the respective dataset portion.
2. The computer-implemented method according to aspect 1, wherein segmenting the dataset into a plurality of dataset portions includes segmenting the dataset into the plurality of dataset portions using an Abstract Syntax Tree, AST, which represents a syntactic structure, in particular an abstract syntactic structure, of the dataset, preferably wherein the metadata is provided in the AST.
3. The computer-implemented method according to aspect 1 or 2, further including:
   providing the plurality of dataset portions and the associated metadata in a lookup table, preferably a Hierarchical Lookup Table, HLT.
4. The computer-implemented method according to aspect 3, wherein the lookup table, preferably the HLT, includes a plurality of nodes which correspond with the dataset portions, respectively.
5. The computer-implemented method according to aspect 4, wherein one of more of the nodes are associated with one or more keywords, preferably wherein the one or more keywords each include one or more of the following: a class name, in particular when the respective node represents a class definition, a method name, a plurality of imports, a plurality of comments, a docstring, and the directory path.
6. The computer-implemented method according to aspect 4 or 5, wherein one or more of the nodes are embedded in the lookup table, preferably the HLT, and then represented in a vector space, preferably using one or more frequency-inverse document frequency, TF-IDF, statistical measures.
7. The computer-implemented method according to any of aspects 3 to 6, wherein context of content within the respective dataset portion and/or context between at least two dataset portions is provided in and/or coupled to the lookup table, preferably the HLT.
8. The computer-implemented method according to aspect 7, wherein the context includes and/or relates to one or more sections of the one or more dataset portions and/or one or more artifacts derived from and/or based on at least one of the one or more dataset portions.
9. The computer-implemented method according to any of the preceding aspects, wherein the context is augmented and/or used by the language model based on and/or dependent from a context length limit of the language model.
10. The computer-implemented method according to any of the preceding aspects, wherein the metadata includes information about one or more of the following: one or more snippets, in particular one or more code snippets, one or more docstrings, one or more comments, and a one or more lists of dependencies (imports).
11. A computer-implemented method of interacting with and/or operating a language model, wherein the language model includes and/or is configured to receive at least one dataset, and optionally metadata relating to the dataset, wherein the at least one dataset is segmented into a plurality of dataset portions, wherein each dataset portion includes and/or is associated with metadata which corresponds to the respective dataset portion, the method comprising:
   receiving a query from a user;
   searching the plurality of dataset portions based on the query;
   identifying one or more relevant dataset portions of the plurality of dataset portions based on the query;
   selecting one or more dataset portions of the plurality of dataset portions based on the query;
   generating a response to the query based on the selected one or more dataset portions.
12. The computer-implemented method according to aspect 11, wherein the plurality of dataset portions and the associated metadata are provided in a lookup table, preferably a Hierarchical Lookup Table, HLT, which includes a plurality of nodes which correspond with the dataset portions, respectively, wherein the one or more nodes of the plurality of nodes are selected based on the query.
13. The computer-implemented method according to aspect 11 or 12, wherein the plurality of dataset portions and the associated metadata are provided in a lookup table, preferably a Hierarchical Lookup Table, HLT, which includes a plurality of nodes which correspond with the dataset portions, respectively, wherein the one or more nodes of the plurality of nodes are selected based on the query.
14. The computer-implemented method according to aspect 13, wherein one of more of the nodes are associated with one or more keywords, preferably wherein the one or more keywords include a class name, in particular when the respective node represents a class definition, and/or a method name, and wherein one or more nodes of the plurality of nodes are selected, if the query contains and/or is correlated with the one or more of the one or more keywords.
15. The computer-implemented method according to aspect 14, wherein the one or more nodes of the plurality of nodes are selected, if one or more of the one or more keywords meet at least one similarity criterion, in particular at least one similarity metric, in particular if one or more of the one or more keywords are within a distance, preferably a Hamming distance, preferably a predetermined Hamming distance, of one or more words and/or symbols and/or strings contained in the query.
16. The computer-implemented method according to any of aspects 13 to 15, wherein one or more of the nodes are embedded in the lookup table into a vector space, preferably using one or more frequency-inverse document frequency, TF-IDF, statistical measures, wherein the query is transformed into one or more vectors, wherein at least one vector of the one or more vectors of the nodes which have the greatest degree of correspondence and/or which are above a correspondence threshold, preferably a predetermined correspondence threshold, with vectors of the query is selected.
17. The computer-implemented method according to any of aspects 13 to 16, wherein context of the respective dataset portion is provided in and/or coupled to the lookup table, preferably the HLT, wherein the method includes:
   adjusting an amount of context, which is taken into account for each query, based on a complexity and/or a length of the query and/or a complexity and/or a length of each dataset portion.
18. The computer-implemented method according to aspect 17, wherein context of the respective dataset portion is provided in and/or coupled to the lookup table, preferably the HLT, wherein, when selecting a dataset portion, a dataset portion, in particular a node of the lookup table, in particular a further dataset portion, in particular a further node, is only selected if the respective dataset portion, in particular the respective node, fits into a context window, in particular a predetermined context wi ndow.
19. The computer-implemented method according to aspect 17 or 18, wherein context of the respective dataset portion is provided in and/or coupled to the lookup table, preferably the HLT, wherein, after selecting a first number of one or more first dataset portions, in particular one or more first nodes, selecting a second number of one or more second dataset portions, in particular one or more second nodes, is based on a distance, in particulara distance in a hierarchical structure, in particularof the dataset, between the one or more first dataset portions, in particular the one or more first nodes, and the one or more second dataset portions, in particular the one or more second nodes.
20. The computer-implemented method according to any of aspects 11 to 19, wherein identifying one or more relevant dataset portions of the plurality of dataset portions based on the query and/or selecting one or more dataset portions of the plurality of dataset portions based on the query is based at least partially based on the metadata.
21. The computer-implemented method according to any of the preceding aspects, wherein the dataset is a codebase and the dataset portions are codebase portions of the codebase.
22. A computer program product including one or more computer readable storage mediums collectively storing program instructions that are executable by a processor or programmable circuitry to cause the processor or programmable circuitry to perform operations for interacting with and/or operating a language model, wherein the language model includes and/or is configured to receive at least one dataset and optionally metadata relating to the dataset, wherein the at least one dataset is segmented into a plurality of dataset portions, wherein each dataset portion includes and/or is associated with metadata which corresponds to the respective dataset portion, the operations comprising:
   receiving a query from a user;
   searching the plurality of dataset portions based on the query;
   identifying one or more relevant dataset portions of the plurality of dataset portions based on the query;
   selecting one or more dataset portions of the plurality of dataset portions based on the query;
   generating a response to the query based on the selected one or more dataset portions.
23. An apparatus comprising:
   a processor or a programmable circuitry; and
   one or more computer readable mediums collectively including instructions that, when executed by the processor or the programmable circuitry, cause the processor or the programmable circuitry to perform operations for interacting with and/or operating a language model, wherein the language model includes and/or is configured to receive at least one dataset and optionally metadata relating to the dataset, wherein the at least one dataset is segmented into a plurality of dataset portions, wherein each dataset portion includes and/or is associated with metadata which corresponds to the respective dataset portion, the operations comprising:
      receiving a query from a user;
      searching the plurality of dataset portions based on the query;
      identifying one or more relevant dataset portions of the plurality of dataset portions based on the query;
      selecting one or more dataset portions of the plurality of dataset portions based on the query;
      generating a response to the query based on the selected one or more dataset portions.
24. A computer readable medium including instructions that when executed by one or more processing devices cause the one or more processing devices to perform a method of interacting with and/or operating a language model, wherein the language model includes and/or is configured to receive at least one dataset and optionally metadata relating to the dataset, wherein the at least one dataset is segmented into a plurality of dataset portions, wherein each dataset portion includes and/or is associated with metadata which corresponds to the respective dataset portion, the method comprising:
   receiving a query from a user;
   searching the plurality of dataset portions based on the query;
   identifying one or more relevant dataset portions of the plurality of dataset portions based on the query;
   selecting one or more dataset portions of the plurality of dataset portions based on the query;
   generating a response to the query based on the selected one or more dataset portions.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: shows an exemplary scheme for codebase parsing for providing input of a language model;
- Fig. 2: shows an exemplary algorithm for implementing one or more of the embodiments of the present disclosure;
- Fig. 3: shows a block diagram of an exemplary apparatus in which various embodiments of the present disclosure may be implemented;
- Fig. 4: shows a computer-implemented method according to an embodiment of the present disclosure;
- Fig. 5: shows a further computer-implemented method according to an embodiment of the present disclosure.

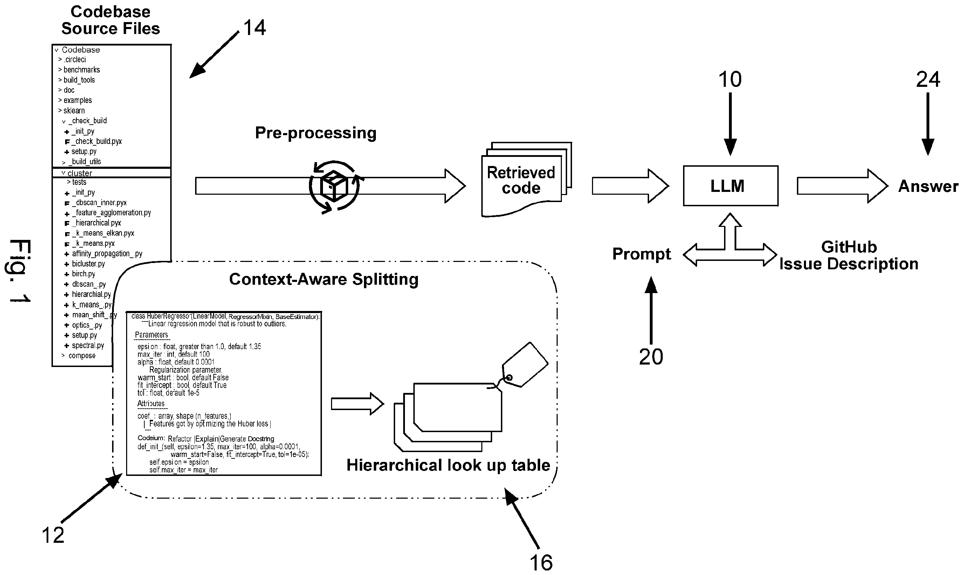

Fig. 1 shows, in a schematic view, a scheme for codebase parsing for providing input of and/or to a language model 10, in particular a large language model (LLM).

The input may be based on at least one dataset 12, e.g., at least one codebase, e.g., provided in one or more codebase source files 14. For exemplary purposes, the at least one dataset 12 will be referred to as at least one codebase below. The at least one codebase 12 may be provided to the language model 10. Metadata relating to the codebase 12 may also be provided to the language model 10. The metadata may include information about one or more of the following: one or more code snippets, one or more docstrings, one or more comments, one or more lists of dependencies, and one or more imports, e.g., as used in python. The at least one codebase 10 and the metadata may be provided to the language model 10 simultaneously or at least partially separately.

Before the at least one codebase 12 and the metadata are provided to the language model 10, the at least one codebase 12 and the metadata may be processed, e.g., in at least one preprocessing step. In particular, the at least one codebase 12 may be segmented into a plurality of codebase portions. Each codebase portion may be associated with a portion of the metadata which corresponds to the respective codebase portion.

In particular, during and/or after segmenting the at least one codebase 12, the plurality of codebase portions and the associated metadata may be provided, e.g., stored, in a lookup table 16, preferably a Hierarchical Lookup Table, HLT. Using a lookup table, in particular a Hierarchical Lookup Table (HLT), structure may further improve codebase awareness. Thus, the scheme may involve segmenting the codebase into different codebase portions, retaining metadata about each codebase portion, and providing, e.g., storing or saving, the codebase portions and their relationships in the lookup table 16, preferably a Hierarchical Lookup Table, HLT (as illustrated in Fig. 1).

After receiving a prompt or query 20 from a user, at least one codebase portion of the codebase may be selected and/or retrieved and provided to the LLM. Based on the retrieved at least one codebase portion of the codebase, the LLM may generate a response or answer to the prompt or query 20.

The scheme described herein may increase an LLM's capabilities to execute tasks such as refactoring, summarizing, resolving issues, and/or generating code snippets in an existing large codebase with relatively high efficiency and relatively high reliability.

The HLT may work by segmenting the codebase into the smaller codebase portions using an Abstract Syntax Tree (AST), a tree representation of the abstract syntactic structure of the code. Metadata about each codebase portion, which may include code snippets, docstrings, dependencies, and more, may be retained and provided, e.g., stored or saved, in the HLT. The HLT may use an embedding representation of code and natural language queries, transforming both into a vector space using a statistical measure TF-IDF (Term Frequency-Inverse Document Frequency. The TF-IDF may assign word importance in a document or corpus.

An implementation of the computer-implemented method described herein may be used to solve generate code that addresses software engineering issues. Given a software engineering issue described in natural language, the HLT identifies the most relevant parts of the codebase by re-ranking common words based on their TF-IDF scores. It then traverses the lookup table to find the most relevant code snippets, docstrings, dependencies, etc.

An example is shown below of a Tree obtained from AST for a Python example. The hierarchy may follow the folder structure itself as well as inheritance written in the JSON file, given by the AST.

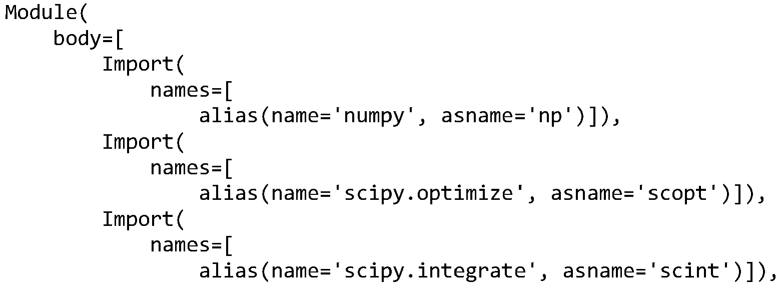

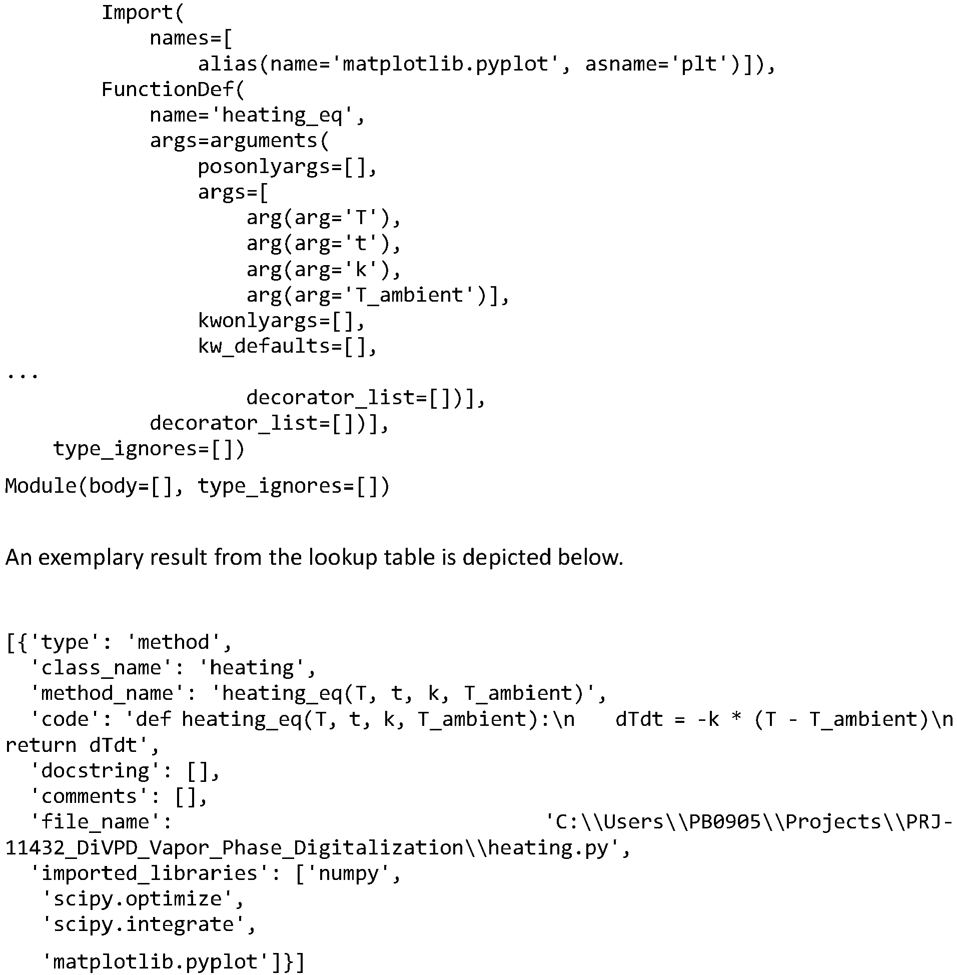

To prevent context size from being exceeded, the proposed solution may also be configured to ensure that the selected code elements, the query, and the necessary context fit within the LLM's context length limit. The amount of context included may be adjusted based on the complexity and/or length of the query and/or the codebase portion(s) involved.

When presented with a query, as shown in Fig. 1, the HLT may identify the most relevant parts of the codebase by re-ranking common words based on their TF-IDF scores and traversing the lookup table to find the most relevant code snippets, docstrings, dependencies, etc.

For codebase segmentation, the HLT may begin by parsing the entire codebase into the AST, effectively segmenting the codebase into smaller, manageable parts. This step ensures that each code element is comprehensively understood and cataloged. For metadata retention, the HLT retains metadata, including information about code snippets, docstrings, dependencies, and/or more, for each division or node in the AST.

Upon a query by the user, related nodes in the HLT may be looked up. An example is keyword-based lookup: A node in the HLT may have some main keyword associated with it, e.g. the class name in case of a node representing a class definition. If the query contains the class name, the node may be be selected. Alternatively, instead of an exact match, small deviations may be tolerated by selecting nodes with most similar words, e.g., according to a Hamming distance. Each node may be embedded in the HLT into a vector space using TF-IDF statistical measures. A query is then transformed in the same way into a vector vq. The nodes corresponding to the vectors closest to the vq may be selected.

One of more mechanisms for context fitting may be provided. For example, while selecting nodes during lookup, a new or additional node may only be selected, if it still fits into the context window. Thereby, nodes with better scores, i.e., closer to the query, may be selected first. If there is still space in the context window after selecting a number of highly scored nodes, additional nodes may be added according to their distance in the hierarchical structure, e.g., AST. For instance, a class node can be augmented with the nodes corresponding to the functions contained in the class, or the parent module that contains the class.

An implementation of the present disclosure was used to solve generate code that addresses software engineering issues. In particular, the approach described herein was run against the existing SWE-bench benchmark.

Given a software engineering issue described in natural language (GitHub pull requests/issue description), the HLT identifies the most relevant parts of the codebase by re-ranking common words based on their TF-IDF scores. It then traverses the lookup table to find the most relevant code snippets, docstrings, dependencies, etc.

An example of an issue statement from the SWEBench dataset is depicted below.

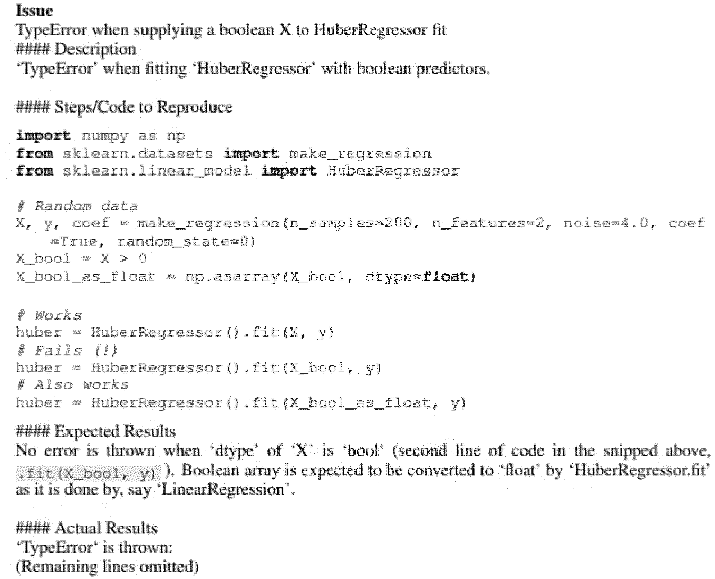

In conjunction with LLMs, the HLT has surprisingly shown significant success in resolving real-world software engineering issues, outperforming even the more complex models. This innovative approach promises to revolutionize the role of AI in software engineering, enhancing both efficiency and effectiveness.

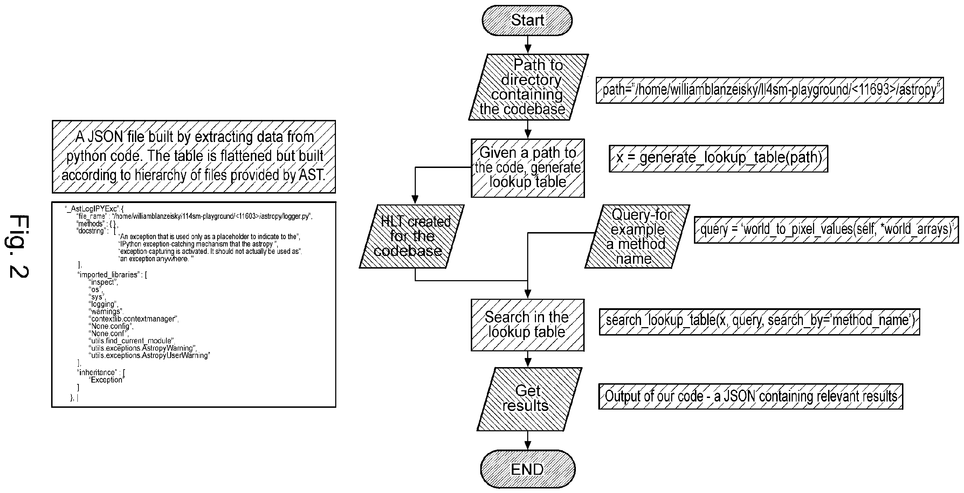

An excerpt from the HLT generated based on an example from the SWEBench dataset is depicted below. 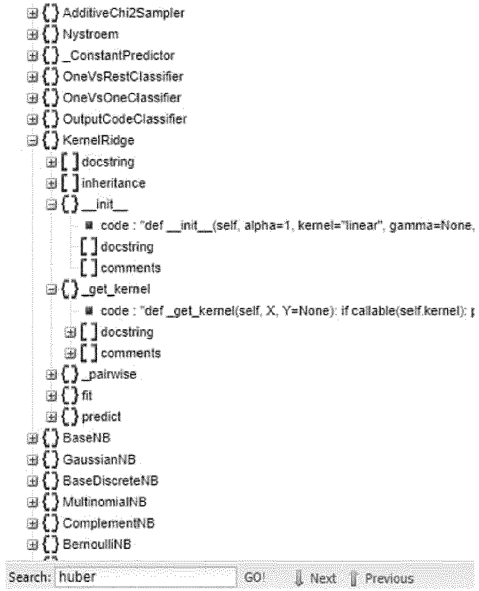 An exemplary code built by the present inventors for the experiments with SWE-Bench contains an algorithm shown in Fig. 2. A path directory containing the codebase may be provided. Given a path to the codebase, a lookup table, e.g., an HLT, may be generated for the codebase. Once a query, for example a metho name, has been provided by a user, the lookup table may be searched. Then results to the query, e.g., an answer or response, may be provided. Fig. 2 also shows an exemplary JSON file built by extracting date from a python code. The table may be flattened but built according to a hierarchy of the files provided by the AST.

Table 1 below illustrates the effectiveness of the HLT-based approach described herein in addressing issues in the SWE-bench dataset based on a subset (25%) of SWE-bench dataset. The Claude 2 model, which can handle about 100K tokens, was able to resolve only 1.7% of the issues. GPT-4, a more advanced and complex model, had a lower success rate at just 0.2%. This result indicates that more advanced or complex models do not necessarily equate to higher problem-solving capabilities in this context. GPT-3.5, another state-of-the-art model, was unable to resolve any of the issues on its own. However, when we combined GPT-3.5 with the HLT, the percentage of resolved issues increased substantially to 7.44%.

Finally, smaller LLMs were tested, Codeium (base model), in combination with the HLT-based approach. Codeium resolved 2.02% of issues, while Copilot outperformed all other models, resolving 8.31% of issues. This suggests that smaller models, when supplemented with relevant context provided by the HLT, can outperform larger, more complex models.

**Table 1**

| **Model** | **% Resolved** |
|---|---|
| **Claude 2 (^{~}100K)** | **1.7** |
| **GPT 4** | **0.2** |
| **GPT 3.5** | **0** |
| **GPT 3.5 + HLT** | **7.44** |
| **Codeium + HLT** | **2.02** |
| **GitHub Copilot (GPT-4) +** | **8.31** |
| **HLT** | |

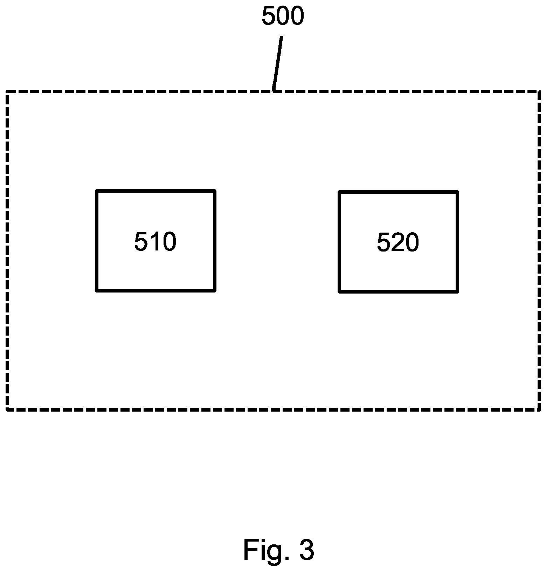

Fig. 3 shows a block diagram of an exemplary apparatus 500 in which various embodiments of the present disclosure may be implemented. The apparatus may comprise at least one processor or at least one programmable circuitry 510. The apparatus 500 may comprise at least one computer readable medium 520 collectively including instructions that, when executed by the processor or the programmable circuitry 510, cause the processor or the programmable circuitry 510 to perform operations for interacting with and/or operating a language model, e.g., the language model 10 shown in Fig. 1. The language model may include at least one codebase and metadata relating to the codebase. The at least one codebase may be segmented into a plurality of codebase portions. Each codebase portion may be associated with a portion of the metadata which corresponds to the respective codebase portion. The operations may comprise one or more of:
receiving a query from a user;
searching the plurality of codebase portions based on the query;
identifying one or more relevant codebase portions of the plurality of codebase portions based on the query;
selecting one or more codebase portions of the plurality of codebase portions based on the query; and
generating a response to the query based on the selected one or more codebase portions.

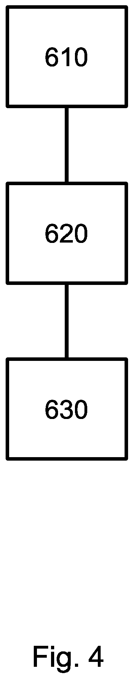

Fig. 4 shows a computer-implemented method of codebase parsing for providing input of a language model according to an embodiment of the present disclosure. The method may be performed by a suitable apparatus, e.g., the apparatus 500 shown in Fig. 3. Block 610 may comprise providing at least one codebase to the language model. Block 620 may comprise providing metadata relating to the codebase to the language model. Block 630 may comprise segmenting the at least one codebase into a plurality of codebase portions. Each codebase portion may be associated with a portion of the metadata which corresponds to the respective codebase portion.

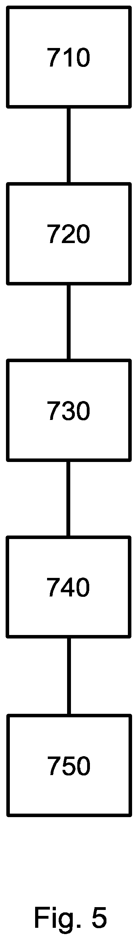

Fig. 5 shows a further computer-implemented method of interacting with a language model according to an embodiment of the present disclosure. The language model may include or may be configured to receive at least one codebase and metadata relating to the codebase. The at least one codebase may be segmented into a plurality of codebase portions. Each codebase portion may be associated with a portion of the metadata which corresponds to the respective codebase portion. The method may be performed by a suitable apparatus, e.g., the apparatus 500 shown in Fig. 3. Block 710 may comprise receiving a query from a user. Block 720 may comprise searching the plurality of codebase portions based on the query. Block 730 may comprise identifying one or more relevant codebase portions of the plurality of codebase portions based on the query. Block 740 may comprise selecting one or more codebase portions of the plurality of codebase portions based on the query. Block 750 may comprise generating a response to the query based on the selected one or more codebase portions.

Various methods are described herein, and each of the methods comprises one or more steps or actions for achieving the described method. Unless a specific order of steps or actions is required for proper operation of the method, the order and/or use of specific steps and/or actions may be modified or combined.

The present disclosure describes a variety of aspects, including various features, embodiments, etc. Many of these aspects are described with specificity and, at least to show the individual characteristics, are often described in a manner that may sound limiting. However, this is for purposes of clarity in description, and does not limit the disclosure herein or scope of those aspects. Indeed, all of the different aspects may be combined and interchanged to provide further aspects. Moreover, the aspects may be combined and interchanged with aspects described in earlier filings as well.

## Claims

1. A computer-implemented method of codebase parsing for providing input of a language model (10), comprising:
providing at least one codebase to the language model (10);
providing metadata relating to the codebase to the language model (10);
segmenting the at least one codebase into a plurality of codebase portions;
wherein each codebase portion is associated with a portion of the metadata which corresponds to the respective codebase portion.

2. The computer-implemented method according to claim 1, wherein segmenting the codebase into a plurality of codebase portions includes segmenting the codebase into the plurality of codebase portions using an Abstract Syntax Tree, AST, which represents a syntactic structure, in particular an abstract syntactic structure, of the codebase, preferably wherein the metadata is provided in the AST.

3. The computer-implemented method according to claim 1 or 2, further including:
providing the plurality of codebase portions and the associated metadata in a lookup table (16), preferably a Hierarchical Lookup Table, HLT.

4. The computer-implemented method according to claim 3, wherein the lookup table, preferably the HLT, includes a plurality of nodes which correspond with the codebase portions, respectively.

5. The computer-implemented method according to claim 4, wherein one of more of the nodes are associated with one or more keywords, preferably wherein the one or more keywords each include one or more of the following: a class name, in particular when the respective node represents a class definition, a method name, a plurality of imports; a plurality of comments, a docstring, and the directory path.

6. The computer-implemented method according to claim 4 or 5, wherein one or more of the nodes are embedded in the lookup table, preferably the HLT, and then represented in a vector space, preferably using one or more frequency-inverse document frequency, TF-IDF, statistical measures.

7. The computer-implemented method according to any of claims 3 to 6, wherein context of content within the respective codebase portion and/or context between at least two codebase portions is provided in and/or coupled to the lookup table, preferably the HLT.

8. The computer-implemented method according to claim 7, wherein the context includes and/or relates to one or more sections of the one or more codebase portions and/or one or more artifacts derived from and/or based on at least one of the one or more codebase portions.

9. The computer-implemented method according to any of the preceding claims, wherein the context is augmented and/or used by the language model based on and/or dependent from a context length limit of the language model.

10. The computer-implemented method according to any of the preceding claims, wherein the metadata includes information about one or more of the following: one or more code snippets, one or more docstrings, one or more comments, one or more lists of dependencies, and one or more imports.

11. A computer-implemented method of interacting with a language model (10), wherein the language model (10) includes at least one codebase and metadata relating to the codebase, wherein the at least one codebase is segmented into a plurality of codebase portions, wherein each codebase portion is associated with a portion of the metadata which corresponds to the respective codebase portion, the method comprising:
receiving a query (20) from a user;
searching the plurality of codebase portions based on the query (20);
identifying one or more relevant codebase portions of the plurality of codebase portions based on the query (20);
selecting one or more codebase portions of the plurality of codebase portions based on the query (20);
generating a response (24) to the query (20) based on the selected one or more codebase portions.

12. The computer-implemented method according to claim 11, wherein the plurality of codebase portions and the associated metadata are provided in a lookup table, preferably a Hierarchical Lookup Table, HLT, which includes a plurality of nodes which correspond with the codebase portions, respectively, wherein the one or more nodes of the plurality of nodes are selected based on the query (20).

13. The computer-implemented method according to claim 11 or 12, wherein the plurality of codebase portions and the associated metadata are provided in a lookup table, preferably a Hierarchical Lookup Table, HLT, which includes a plurality of nodes which correspond with the codebase portions, respectively, wherein the one or more nodes of the plurality of nodes are selected based on the query (20).

14. The computer-implemented method according to any of claims 11 to 13, wherein identifying one or more relevant codebase portions of the plurality of codebase portions based on the query and/or selecting one or more codebase portions of the plurality of codebase portions based on the query is based at least partially based on the metadata.

15. A computer program product including one or more computer readable storage mediums collectively storing program instructions that are executable by a processor or programmable circuitry to cause the processor or programmable circuitry to perform operations for interacting with a language model, wherein the language model includes at least one codebase and metadata relating to the codebase, wherein the at least one codebase is segmented into a plurality of codebase portions, wherein each codebase portion is associated with a portion of the metadata which corresponds to the respective codebase portion, the operations comprising:
receiving a query from a user;
searching the plurality of codebase portions based on the query;
identifying one or more relevant codebase portions of the plurality of codebase portions based on the query;
selecting one or more codebase portions of the plurality of codebase portions based on the query;
generating a response (24) to the query based on the selected one or more codebase portions.

16. An apparatus (500) comprising:
a processor or a programmable circuitry (510); and
one or more computer readable mediums (520) collectively including instructions that, when executed by the processor or the programmable circuitry (510), cause the processor or the programmable circuitry (510) to perform operations for interacting with a language model (10), wherein the language model includes at least one codebase and metadata relating to the codebase, wherein the at least one codebase is segmented into a plurality of codebase portions, wherein each codebase portion is associated with a portion of the metadata which corresponds to the respective codebase portion, the operations comprising:
receiving a query from a user;
searching the plurality of codebase portions based on the query;
identifying one or more relevant codebase portions of the plurality of codebase portions based on the query;
selecting one or more codebase portions of the plurality of codebase portions based on the query;
generating a response (24) to the query based on the selected one or more codebase portions.

17. A computer readable medium (520) including instructions that when executed by one or more processing devices (510) cause the one or more processing devices to perform a method of interacting with a language model (10), wherein the language model includes at least one codebase and metadata relating to the codebase, wherein the at least one codebase is segmented into a plurality of codebase portions, wherein each codebase portion is associated with a portion of the metadata which corresponds to the respective codebase portion, the method comprising:
receiving a query from a user;
searching the plurality of codebase portions based on the query;
identifying one or more relevant codebase portions of the plurality of codebase portions based on the query;
selecting one or more codebase portions of the plurality of codebase portions based on the query;
generating a response (24) to the query based on the selected one or more codebase portions.
